# EUROPÄISCHE PATENTSCHRIFT

(11) **EP 1 519 848 B1**
(45) Veröffentlichungstag und Bekanntmachung des Hinweises auf die Patenterteilung: **05.04.2006**
(21) Anmeldenummer: 03738071.4
(22) Anmeldetag: 20.06.2003
(51) Int. Cl.: B60H 1/22

(54) **HEIZEINRICHTUNG, INSBESONDERE FÜR EIN FAHRZEUG**
HEATING DEVICE, PARTICULARLY FOR A VEHICLE
DISPOSITIF DE CHAUFFE, EN PARTICULIER POUR UN VEHICULE A MOTEUR

(30) Priorität: 20.06.2002 DE 10227626
(43) Veröffentlichungstag der Anmeldung: 06.04.2005
(73) Patentinhaber: J. Eberspächer GmbH Co. KG, 73730 Esslingen (DE); MAN Nutzfahrzeuge Aktiengesellschaft, 80995 München (DE)
(72) Erfinder: SCHLECHT, Patric, 73760 Ostfildern (DE); COLLMER, Andreas, 73760 Ostfildern (DE); GERLACH, Günter, 85757 Karlsfeld (DE)
(74) Vertreter: Ruttensperger, Bernhard
(86) Internationale Anmeldenummer: PCT/EP2003/006507
(87) Internationale Veröffentlichungsnummer: WO 2004/000591

(56) Entgegenhaltungen:
- EP-A- 0 374 878
- GB-A- 737 650
- GB-A- 818 865
- GB-A- 2 257 242

## Beschreibung

Die vorliegende Erfindung betrifft eine Heizeinrichtung insbesondere für ein Fahrzeug, umfassend eine Brenneranordnung zur Erzeugung von Verbrennungswärme sowie eine Wärmetauscheranordnung zur Übertragung von in der Brenneranordnung erzeugter Verbrennungswärme auf zu erwärmendes Medium.

In Fahrzeugen besteht in verschiedenen Systembereichen und im Allgemeinen auch zu verschiedenen Zeitpunkten die Anforderung, durch Erwärmung eines Mediums Einfluss auf den Betrieb bzw. die Funktionalität zu nehmen. So ist es bekannt, durch die Aktivierung von Standheizungen vor der allgemeinen Inbetriebnahme eines Fahrzeugs zur Erhöhung des Komforts und ggf. zum Enteisen von Fensterscheiben den Innenraum des Fahrzeugs vorzuheizen. Ferner ist es insbesondere in Verbindung mit modernen Dieselaggregaten oftmals am Beginn des Betriebs derselben erforderlich, zusätzlich Wärme zur Erwärmung des Innenraums bereitzustellen, insbesondere dann, wenn vergleichsweise niedrige Außentemperaturen vorherrschen. Um Brennkraftmaschinen, welche in Fahrzeugen allgemein als Antriebsaggregate eingesetzt werden, möglichst schnell in einen Betriebszustand mit geringem Schadstoffausstoß bringen zu können, ist es weiter vorteilhaft, am Betriebsbeginn durch Erwärmung eines allgemein zur Kühlung dieser Antriebsaggregate eingesetzten Mediums diese Antriebsaggregate vorzuheizen bzw. die Erwärmung derselben zu unterstützen.

Dokument GB-A-2257242 offenbart eine Heizeinrichtung gemäß der Oberbegriff des Anspruchs eines.

Es ist die Aufgabe der vorliegenden Erfindung, eine kompakt ausgestaltete Heizeinrichtung vorzusehen, welche die verschiedenen Erwärmungsanforderungen in einem Fahrzeug erfüllt.

Erfindungsgemäß wird diese Aufgabe gelöst durch eine Heizeinrichtung, insbesondere für ein Fahrzeug, umfassend eine Brenneranordnung zur Erzeugung von Verbrennungswärme sowie eine Wärmetauscheranordnung zur Übertragung von in der Brenneranordnung erzeugter Verbrennungswärme auf zu erwärmendes Medium, wobei die Wärmetauscheranordnung einen ersten Wärmetauscherbereich zur Übertragung von Verbrennungswärme auf ein erstes zu erwärmendes Medium aufweist und einen zweiten Wärmetauscherbereich zur Übertragung von Verbrennungswärme auf ein zweites zu erwärmendes Medium aufweist.

Wesentlich ist bei der erfindungsgemäßen Heizeinrichtung, dass eine einzige Brenneranordnung als Wärmequelle vorgesehen ist und durch Aufgliedern der Wärmetauscheranordnung in zwei Bereiche zwei verschiedene Medien unabhängig voneinander erwärmt werden können. Es ist also nicht für jedes Medium eine eigenständige Heizeinrichtung mit Wärmetauscheranordnung und Brennerbereich vorzusehen, was neben der deutlichen Bauraumeinsparung auch eine deutlich verminderte Baugröße und geringere Kosten mit sich bringt.

Dabei kann die erfindungsgemäße Heizeinrichtung beispielsweise eingesetzt werden, um als erstes zu erwärmendes Medium ein gasförmiges Medium, beispielsweise die in einen Fahrzeuginnenraum einzuleitende Luft, zu erwärmen, und als zweites zu erwärmendes Medium ein flüssiges Medium, beispielsweise die durch ein Antriebsaggregat zirkulierende Kühlflüssigkeit, zu erwärmen.

Um bei der erfindungsgemäßen Heizeinrichtung die im Brennerbereich generierte Verbrennungswärme effizient auf die verschiedenen Medien übertragen zu können, wird vorgeschlagen, dass die Wärmetauscheranordnung einen Wärmetauscherkörper mit einem darin vorgesehenen Verbrennungsabgasführungsraum zur Aufnahme von Verbrennungswärme aus den Verbrennungsabgasführungsraum durchströmenden Verbrennungsabgasen aufweist.

Insbesondere dann, wenn das erste zu erwärmende Medium gasförmig ist, ist es vorteilhaft, wenn der erste Wärmetauscherbereich eine Mehrzahl von an dem Wärmetauscherkörper vorgesehenen, jeweils Wärmeübertragungsflächen bereitstellenden Wärmeübertragungsrippen aufweist.

Da im Allgemeinen der Wärmetauscherkörper der Wärmetauscheranordnung als sehr kompaktes Metallbauteil in einem Gussverfahren hergestellt wird, wird aus Gründen der einfacheren Herstellbarkeit und aus Kostengründen vorgeschlagen, dass die Wärmeübertragungsrippen wenigstens zum Teil von dem Wärmetauscherkörper separat ausgebildet sind und mit diesem in Wärmeübertragungsverbindung stehen. Hier kann sowohl vorgesehen sein, dass Kühlrippen teilweise separat und teilweise bzw. abschnittsweise am Wärmetauscherkörper ausgebildet sind, als auch dass Kühlrippen vollständig separat vom Wärmetauscherkörper ausgebildet und beispielsweise an einer Außenoberfläche desselben angebracht sind.

Bei der erfindungsgemäßen Heizeinrichtung ist weiter vorgesehen dass der zweite Wärmetauscherbereich eine Strömungsleitungsanordnung für das zweite zu erwärmende Medium aufweist. dies kann dadurch realisiert werden, dass die Strömungsleitungsanordnung einen in dem Wärmetauscherkörper ausgebildeten Mediumführungskanal umfasst. Dies ist baulich vergleichsweise einfach zu realisieren da die im Bereich der Heizeinrichtung vorzusehenden und der Strömungsführung des zweiten Mediums dienenden Organe im Wesentlichen vollständig in den Wärmetauscherkörper integriert werden können. Um dabei eine möglichst effiziente Wärmeübertragung auf das zweite zu erwärmende Medium vorsehen zu können, wird vorgeschlagen, dass der Mediumführungskanal eine Mehrzahl von Mediumführungskanalbereichen umfasst. Bei einer derartigen Ausgestaltungsform kann in sehr einfacher Art und Weise Einfluss auf die übertragene Wärmemenge dadurch genommen werden, dass wenigstens ein Teil der Mediumführungskanalbereiche selektiv zur Durchströmung freigebbar ist. Zu diesem Zwecke kann beispielsweise eine ansteuerbare Ventilanordnung vorgesehen sein. Ferner ist es möglich, das Absperren bzw. das Ausmaß des Absperrens verschiedener Kanalbereiche dadurch vorzunehmen, dass bimetallartig ausgebildete Abschlusselemente bzw. Membranelemente je nach Temperatur des zweiten Mediums verschiedene Kanalbereiche mehr oder weniger stark abschließen bzw. freigeben.

Um die thermische Wechselwirkung des zweiten zu erwärmenden Mediums im Bereich des Wärmetauscherkörpers mit den diesen ebenfalls durchströmenden Verbrennungsabgasen sehr effizient gestalten zu können, wird vorgeschlagen, dass der Mediumführungskanal sich in dem Wärmetauscherkörper näherungsweise parallelzum Verbrennungsabgas führungsraum erstreckt.

Bei der erfindungsgemäßen Heizeinrichtung ist vorgesehen dass die Strömungsleitungsanordnung wenigstens eine im Bereich der Wärmeübertragungsrippen verlaufende Mediumführungsleitung umfasst. Das zweite zu erwärmende Medium nimmt also Wärme unter Vermittlung der als Wärmeleiter dienenden Wärmeübertragungsrippen auf.

Bei der erfindungsgemäßer Heizenrichtung ist vorgesehen dass die wenigstens eine Mediumführungsleitung wenigstens einen Teil der Wärmeübertragungsrippen durchsetzt um Platz zu Sparen. Hier ist es besonders vorteilhaft, dass die wenigstens eine Mediumführungsleitung wenigstens einen Teil der Wärmeübertragungsrippen mehrfach durchsetzt.

Die erfindungsgemäße Heizeinrichtung kann eine das erste zu erwärmende Medium führende Gehäuseanordnung aufweisen, wobei die Wärmetauscheranordnung im Wesentlichen in der Gehäuseanordnung angeordnet ist und die Brenneranordnung im Wesentlichen außerhalb der Gehäuseanordnung angeordnet ist. Auf diese Art und Weise ist zum einen ein sehr effizienter Wärmeübertrag auf das erste zu erwärmende Medium möglich, zum anderen sind die vor allem hinsichtlich der Durchführung von Wartungsarbeiten relevanten Systemelemente, welche hauptsächlich im Bereich der Brenneranordnung zu finden sind, von außen sehr gut zugänglich.

Gemäß einem weiteren sehr vorteilhaften Aspekt der vorliegenden Erfindung kann die Heizeinrichtung so ausgestaltet sein, dass keiner der Wärmetauscherbereiche zur Erwärmung des darin zu erwärmenden Mediums das in dem anderen Wärmetauscherbereich zu erwärmende Medium benötigt. Dies bedeutet, dass die verschiedenen Wärmetauscherbereiche voneinander im Wesentlichen unabhängig wirksam werden können. Der Betrieb bzw. die Wirksamkeit derselben kann alleine dadurch reguliert werden, in welchem Ausmaß das jeweilige zu erwärmende Medium zu dem bestimmten Wärmetauscherbereich geleitet wird. Dass die insgesamt von der Brenneranordnung zur Verfügung gestellte Wärmemenge sich je nach Zufuhr der verschiedenen zu erwärmenden Medien dann verschieden auf diese verteilen wird und insofern eine mehr oder weniger starke Erwärmung des einen Mediums einen Einfluss auf die Erwärmung des anderen Mediums haben wird, ist selbstverständlich. Gleichwohl ist vorzugsweise die erfindungsgemäße Heizeinrichtung so ausgestaltet, dass jeder der Wärmetauscherbereiche für sich zur Erwärmung des jeweils zugeordneten Mediums aktiviert werden kann, ohne dass der andere Wärmetauscherbereich wirksam ist, beispielsweise dadurch nicht wirksam ist, dass diesem kein zu erwärmendes Medium zugeführt wird.

Die vorliegende Erfindung betrifft ferner ein Heizsystem für ein Fahrzeug, umfassend eine erfindungsgemäße Heizeinrichtung, wobei ein Luftströmungsbereich dem ersten Wärmetauscherbereich der Wärmetauscheranordnung zu erwärmende und in einen Fahrzeuginnenraum einzuleitende Luft vermittels einer ersten Förderanordnung als erstes zu erwärmendes Medium zuführt und ein Temperiermittelströmungsbereich dem zweiten Wärmetauscherbereich der Wärmetauscheranordnung Temperiermittel eines Antriebsaggregats vermittels einer zweiten Förderanordnung als zweites zu erwärmendes Medium zuführt.

Die Erfindung wird nachfolgend mit Bezug auf die beiliegenden Zeichnungen anhand verschiedener Ausgestaltungsformen detailliert beschrieben. Es zeigt:
- Fig. 1: eine Prinzipdarstellung eines eine erfindungsgemäße Heizeinrichtung umfassenden Heizsystems;
- Fig. 2: eine perspektivische Ansicht einer erfindungsgemäßen Heizeinrichtung im eingebauten Zustand;
- Fig. 3: eine Schnittansicht der in Fig. 2 dargestellten Heizeinrichtung;
- Fig. 4: eine weitere perspektivische Darstellung einer erfindungsgemäßen Heizeinrichtung gemäß einer alternativen Ausgestaltungsform im eingebauten Zustand;
- Fig. 5: die in Fig. 4 dargestellte Heizeinrichtung bei weggelassenem Gehäuse.

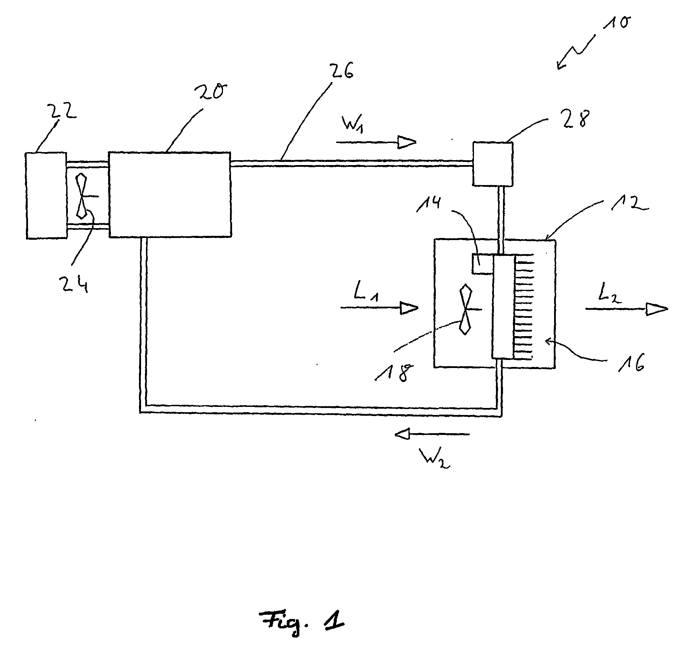

In Fig. 1 ist ein beispielsweise in einem Fahrzeug einsetzbares Heizsystem allgemein mit 10 bezeichnet. Dieses Heizsystem umfasst eine nachfolgend noch detaillierter beschriebene Heizeinrichtung 12, in welcher durch Aktivierung eines Heizbrenners 14 Verbrennungswärme erzeugt wird. Die Verbrennungswärme wird in einer Wärmetauscheranordnung 16 auf verschiedene zu erwärmende Medien übertragen. So wird beispielsweise vermittels eines Luftgebläses 18, beispielsweise fahrzeugeigenes Gebläse, ein Luftstrom L, an die Wärmetauscheranordnung 16 herangeführt, wobei beim Umströmen der Wärmetauscheranordnung 16 der Luftstrom L, Wärmeenergie aufnimmt und die Heizeinrichtung 12 in Richtung zu einem Fahrzeuginnenraum hin als erwärmter Luftstrom L₂ verlässt. Je nachdem, wie stark das Gebläse 18 betrieben wird bzw. in welchem Ausmaß entsprechende Luftdrosselklappen geöffnet bzw. geschlossen sind, kann hier die Menge der erwärmten in den Fahrzeuginnenraum einzuspeisenden Luft eingestellt werden.

Man erkennt in Fig. 1 ferner ein beispielsweise als Brennkraftmaschine ausgebildetes Antriebsaggregat 20. Diesem ist ein Kühler 22 mit einem Kühlergebläse 24 zugeordnet. Zwischen dem Antriebsaggregat 20 und dem Kühler 22 zirkuliert Kühlflüssigkeit, um eine Überhitzung des Antriebsaggregats 20 zu vermeiden. In einem weiteren Kühlmittelkreislauf 26 wird ein Kühlmittelstrom W₁ vermittels einer Pumpe 28 zur Heizeinrichtung 12 geleitet. Das vermittels der Pumpe 28 zur Heizeinrichtung 12 geleitete Kühlmittel durchströmt die Wärmetauscheranordnung 16 und verlässt die Heizeinrichtung 12 als thermisch behandelter Kühlmitteistrom W₂. Dieser wird wieder zum Antriebsaggregat 20 geleitet. Je nachdem, in welchem Ausmaß die Pumpe 28 betrieben wird bzw. wie entsprechend den Kreislauf 26 zu- bzw. abschaltenden Ventile geschaltet sind, kann der Kühlmittelstrom bzw. die Menge der übertragenen Wärme eingestellt werden.

Durch den vorangehend beschriebenen Aufbau wird es möglich, das erfindungsgemäße Heizsystem 10 in verschiedenen Betriebsmodi zu betreiben. So kann in einem Standheizbetrieb lediglich das Gebläse 18 aktiviert werden, so dass im Wesentlichen die gesamte im Heizbrenner 14 erzeugte Verbrennungwärme in der Wärmetauscheranordnung auf die in den Fahrzeuginnenraum einzuleitende Luft übertragen werden kann. Es wird auf diese Art und Weise eine sehr schnelle und effiziente Erheizung des Fahrzeuginnenraums ermöglicht. In dieser Phase ist der Kreislauf 26 nicht aktiv, was bedeutet, dass auf das Kühlmittel des Antriebsaggregats 20 keine Wärme übertragen wird.

In einem zweiten Betriebsmodus kann die Heizeinrichtung 12 dazu betrieben werden, das Antriebsaggregat 20 vorzuwärmen bzw. dieses in seiner Startphase beschleunigt zu erwärmen. In dieser Phase wird lediglich die Pumpe 28 betrieben, das Gebläse 18 ist deaktiviert. Die im Heizbrenner 14 erzeugte Verbrennungswärme wird dann in der Wärmetauscheranordnung 16 im Wesentlichen auf das im Kreislauf 26 strömende Kühlmittel übertragen, so dass eine sehr schnelle Erwärmung des Antriebsaggregats 20 erlangt werden kann.

In einem dritten Betriebsmodus kann in der Startphase des Antriebsagregats bei dekativiertem Kreislauf 26, d. h. bei deaktivierter Pumpe 28, zur beschleunigten Erwärmung des Fahrzeuginnenraums wiederum das Gebläse 18 aktiviert werden, so dass die Verbrennungswärme im Wesentlichen vollständig auf die zu erwärmende Luft übertragen wird. Dieser Betriebsmodus entspricht im Wesentlichen dem Standheizbetriebsmodus, jedoch bei gleichzeitig betriebenem bzw. gestartetem Antriebsaggregat 20.

In einem Fahrbetriebsmodus, also einem Zustand, in welchem das Antriebsaggregat 20 vergleichsweise warm ist und somit durch Erregen der Pumpe 28 sehr warmes Kühlmittel als Strom W₁ in den Kreislauf 26 eingeleitet werden kann, kann dieses Kühlmittel in der Wärmetauscheranordnung 16 Wärme auf die durch Erregung des Gebläses 18 gleichzeitig auch in die Heizeinrichtung 12 geleitete Luft übertragen. D. h., die in den Fahrzeuginnenraum einzuspeisende Luft wird durch im Antriebsaggregat 20 bereitgestellte Wärmeenergie, übertragen durch das flüssige Kühlmittel und die Wärmetauscheranordnung 16, erwärmt. Der Heizbrenner 14 muss in dieser Phase nicht aktiviert sein.

In einem Mischbetriebsmodus kann beispielsweise bei stehendem Fahrzeug bei gleichzeitig laufendem Antriebsaggregat 20 und aktiviertem Heizbrenner 14 in der Heizeinrichtung 12 sowohl Wärme auf die in den Fahrzeuginnenraum einzuleitende Luft übertragen werden, als auch Wärme auf das im Kreislauf 26 zirkulierende Kühlmittel übertragen werden. Dies ist insbesondere bei sehr niedrigen Außentemperaturen vorteilhaft, da in diesem Zustand auch bei beispielsweise mit Leerlaufdrehzahl laufendem Antriebsaggregat 20 dieses bei einer geeigneten Betriebstemperatur gehalten werden kann.

Zu dem Heizsystem 10 sei allgemein noch ausgeführt, dass selbstverständlich die verschiedenen als Förderanordnungen wirksamen Systemkomponenten, also das Gebläse 18 und die Pumpe 28, nicht notwendigerweise jeweils stromaufwärts der Wärmetauscheranordnung 16 angeordnet sein müssen. Sowohl die Pumpe 28 als auch das Gebläse 18 können die jeweilige Zirkulations- bzw. Förderwirkung für die verschiedenen in die Wärmetauscheranordnung 16 einzuleitenden Medien durch Saugwirkung erzeugen.

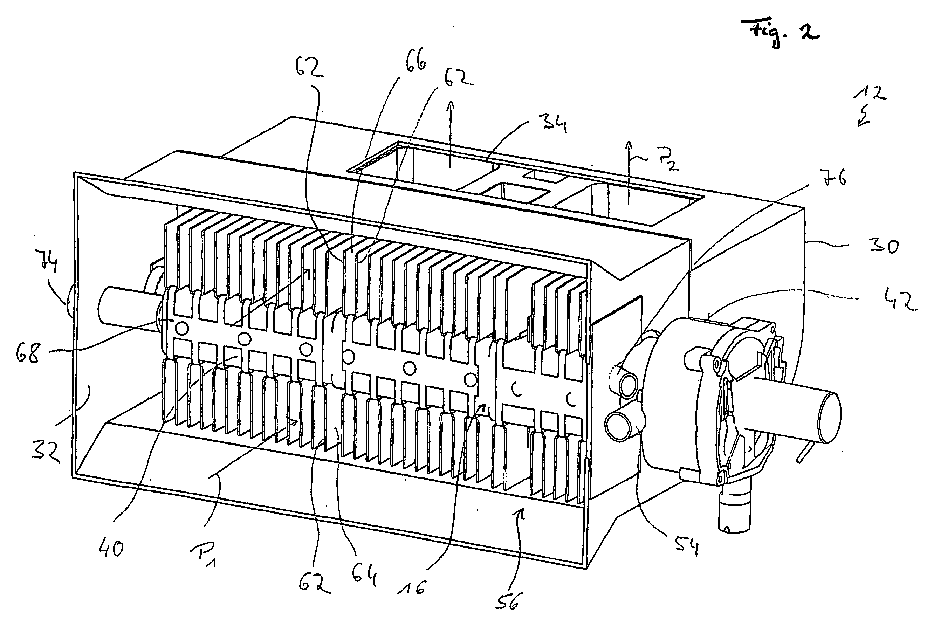

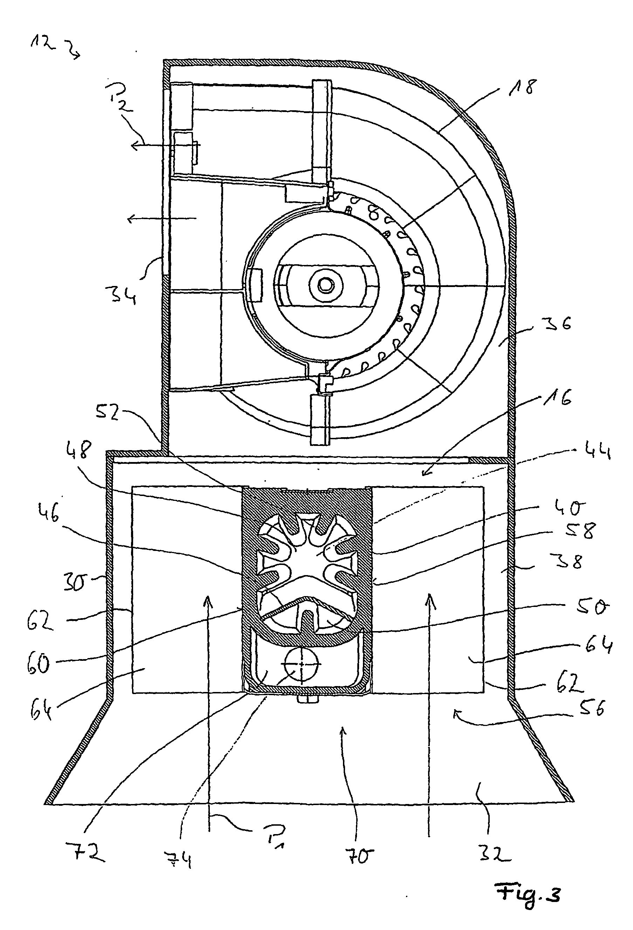

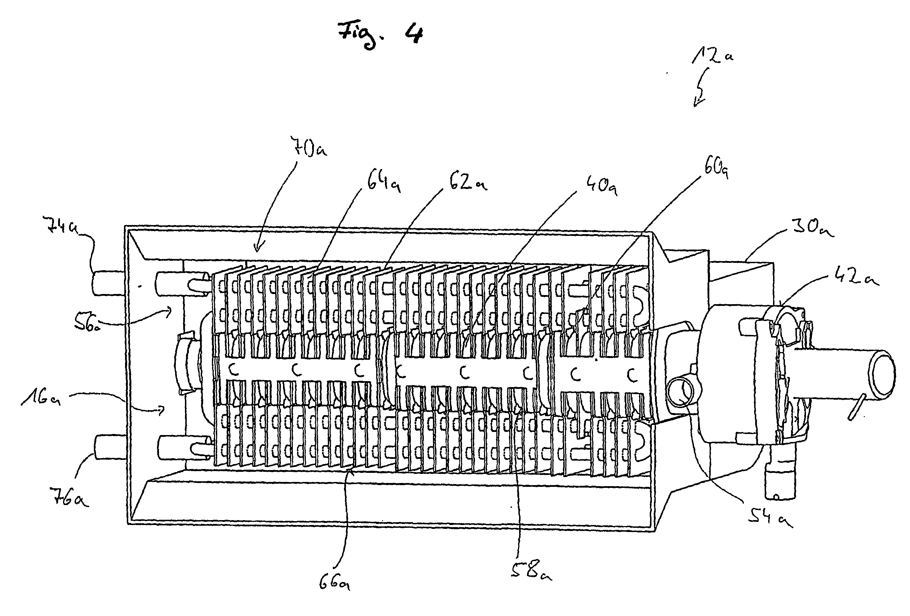

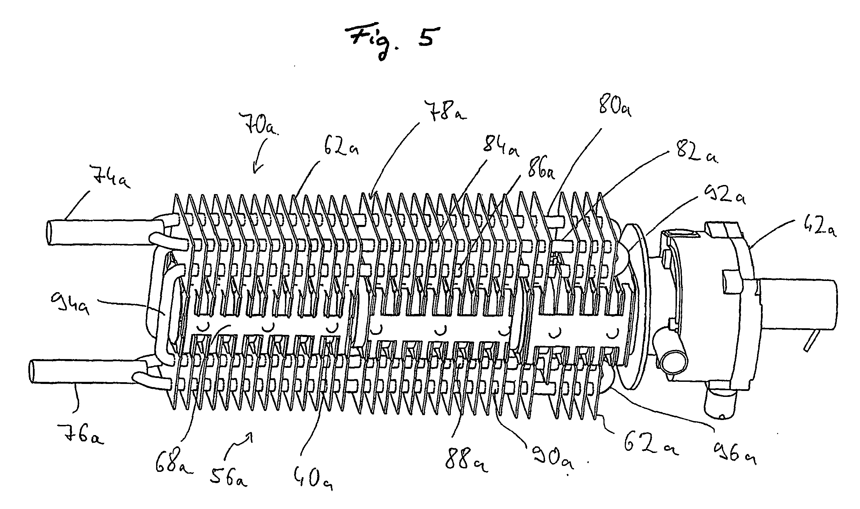

Nachfolgend wird mit Bezug auf die Figuren 2 bis 5 der konstruktive Aufbau der in Fig. 1 nur schematisch dargestellten Heizeinrichtung 12 detailliert beschrieben. Dabei zeigen die Figuren 2 und 3 einerseits und die Figuren 4 und 5 andererseits jeweils verschiedene Ausgestaltungsformen einer derartigen Heizeinrichtung 12.

Bei der in den Figuren 2 und 3 dargestellten Heizeinrichtung 12 erkennt man zunächst ein beispielsweise einteilig ausgebildetes Gehäuse 30, beispielsweise fahrzeugeigenes Luftführungsgehäuse, in welches die Wärmetauscheranordnung 16 integriert ist. Die Gehäuseanordnung 30 weist eine Eintrittsöffnung 32 für die zu erwärmende Luft, d. h. in Fig. 1 den Luftstrom L1 auf, durch welche Öffnung 32 hindurch der Luftstrom L1, wie durch Pfeile P, angedeutet in die Heizeinrichtung 12 einströmt. Stromabwärts der Wärmetauscheranordnung 16 ist das in Fig. 1 ebenfalls schematisch angedeutete Gebläse 18 vorgesehen, so dass die Luft unter Saugwirkung dieses Gebläses 18 in das Gehäuse 30 eintritt. Im Bereich einer Austrittsöffnungsanordnung 34 verlässt die Luft das Gehäuse 30, wie durch Pfeile P₂ angedeutet. Man erkennt vor allem in Fig. 3, dass das Gehäuse 30 im Wesentlichen in zwei Bereiche 36, 38 unterteilt ist. Während im Bereich 38 im Wesentlichen die Wärmetauscheranordnung 16 positioniert ist, ist im Bereich 36 das bereits angesprochene Gebläse 18 und ggf. eine Klimatisierungseinrichtung vorgesehen.

Die Wärmetauscheranordnung 16 umfasst einen z. B. aus Metall in einem Gussverfahren hergestellten Wärmetauscherkörper 40, der sich quer zur Strömungsrichtung P, im Wesentlichen über die gesamte Länge der Öffnung 32 des Gehäuses 30 hinweg erstreckt und in seinen beiden Längsendbereichen am Gehäuse 30 getragen ist. An dem in Fig. 2 rechts erkennbaren Endbereich des Wärmetauscherkörpers 40 ist eine allgemein mit 42 bezeichnete Brenneranordnung vorgesehen. Diese umfasst, wie allgemein bekannt, eine Brennkammer, an welche anschließend ein in den Wärmetauscherkörper 40 führendes Flammrohr vorgesehen sein kann, eine Kraftstoffzufuhr, ein Verbrennungsluftgebläse und dergleichen. Die wesentlichen Komponenten dieser Brenneranordnung sind außerhalb des Gehäuses 30 vorgesehen, so dass leichter Zugriff auf die Brenneranordnung 42 möglich ist, beispielsweise um Wartungs- oder Reparaturarbeiten durchzuführen.

Der langgestreckte Wärmetauscherkörper 40 weist einen Verbrennungsabgasströmungsraum 44 auf, welcher sich im Wesentlichen entlang der gesamten Länge des Wärmetauscherkörpers 40 in diesem erstreckt. Durch ein Trennelement 46 ist dieser Raum 44 in zwei Raumbereiche 48, 50 unterteilt. In den an seiner Innenoberfläche mit einer Rippenanordnung 52 ausgebildeten Raumbereich 48 strömen die die Brenneranordnung 42 verlassenden Verbrennungsabgase ein und strömen entlang dieses Raumbereichs zu dem in der Fig. 2 rechts liegenden Ende des Wärmetauscherkörpers 40. Dort werden die Verbrennungsabgase umgelenkt und gelangen in den Raumbereich 50, in welchem sie wieder zurück in Richtung zur Brenneranordnung 42 strömen. Diesen Raumbereich 50 verlassen die Verbrennungsabgase dann über einen Austrittsstutzen 54, der außerhalb des Gehäuses 30 liegt. Somit besteht nicht die Gefahr, dass auf Grund eines Defekts oder einer Leckage Verbrennungsabgase innerhalb des Gehäuses 30 aus dem Wärmetauscherkörper 40 austreten und in den in den Fahrzeuginneraum einzuleitenden Luftstrom gelangen.

Beim Strömen durch den Wärmetauscherkörper 40 übertragen die Verbrennungsabgase Wärme auf den Wärmetauscherkörper 40, welche dieser dann, wie im Folgenden beschrieben, über zwei Wärmetauscherbereiche an die das Gehäuse 30 durchströmende Luft einerseits und an das im Kreislauf 26 der Fig. 1 zirkulierende flüssige Kühlmittel andererseits abgeben wird.

Der erste Wärmetauscherbereich 56 umfasst neben dem Wärmetauscherkörper 40, welcher selbstverständlich auch einen Bereich dieses ersten Wärmetauscherbereichs 56 bildet, an zwei sich gegenüber liegenden Seitenbereichen 58, 60 des Wärmetauscherkörpers 40 jeweils eine Mehrzahl von in der Längsrichtung des Wärmetauscherkörpers 40 aufeinander folgenden Wärmeübertragungsrippen 62. Diese Wärmeübertragungsrippen 62 stellen jeweilige Wärmeübertragungsflächen 64 bereit, die sich im Wesentlichen in der Strömungsrichtung P₁ des das Gehäuse 30 durchsetzenden Luftstroms erstrecken. Somit stellt dieser erste Wärmetauscherbereich 56 eine vergleichsweise große Gesamtfläche zur Wärmeübertragung bereit, wobei der Strömungswiderstand für die das Gehäuse 30 durchströmende Luft gering gehalten ist. Hinsichtlich der konstruktiven Ausgestaltung der Wärmeübertragungsrippen 62 sei ausgeführt, dass jeweilige Wärmeübertragungsrippenelemente 66 vorgesehen sein können, von welchen jedes zwei nebeneinander liegende Wärmeübertragungsrippen 62 umfasst. Diese Wärmeübertragungsrippenelemente 66 können durch Biegen von Blechmaterialrohlingen in U-förmige Gestalt erhalten werden. Durch beidseits des Wärmeübertragungskörpers vorgesehene, beispielsweise auch aus Blechmaterial gefertigte Klammerelemente 68 werden die Wärmeübertragungsrippenelemente 66 an dafür vorgesehenen und entsprechend der Formgebung dieser Elemente 66 in ihren gekrümmten Bereichen ausgebildeten Bereichen des Wärmeübertragungskörpers 40 gehalten, so dass ein guter Wärmeübertragungskontakt zwischen diesen Wärmeübertragungselementen 66 und somit den Wärmeübertragungsrippen 62 und dem Wärmetauscherkörper 40 besteht.

Die Ausgestaltung des ersten Wärmetauscherbereichs 56 mit vom Wärmetauscherkörper 40 separat ausgebildeten, an diesem aber festgelegten Wärmeübertragungsrippen 62 vereinfacht die Herstellung der Wärmetauscheranordnung 16, insbesondere des im Gussverfahren hergestellten Wärmetauscherkörpers 40 derselben.

In einem zweiten im Wesentlichen im Wärmetauscherkörper 40 ausgebildeten Wärmetauscherbereich 70 wird das flüssige Kühlmittel erwärmt bzw. überträgt, wie vorangehend auch beschrieben, dieses Kühlmittel bei entsprechender Vorerwärmung durch das Antriebsaggregat 20 Wärme auf den Wärmetauscherkörper 40. Insofern bildet also der Wärmetauscherkörper 40 auch einen Bestandteil des zweiten Wärmetauscherbereichs 70.

Man erkennt in Fig. 3, dass im Wärmetauscherkörper 40 ein sich näherungsweise parallel zum Verbrennungsabgasführungsraum 44 erstreckender Strömungskanal 72 vorgesehen ist. Im Bereich eines Einlassstutzens 74 kann die zu erwärmende Flüssigkeit in diesen Kanal 72 eintreten. Im Bereich eines Auslassstutzens 76 kann die Flüssigkeit dann diesen Kanal 72 verlassen. Es sei darauf hingewiesen, dass selbstverständlich die Strömungsrichtung auch in entgegengesetzter Richtung verlaufen kann. Um die Wärmeübertragung im zweiten Wärmetauscherbereich 70 sehr effizient zu gestalten, ist es möglich, im Kanal 72 Verwirbelungselemente, wie z. B. eine Flüssigkeitsführungsspirale, vorzusehen, um für eine gute Durchmischung der diesen Kanal 72 durchströmenden Flüssigkeit zu sorgen. Auch ist es möglich, den Kanal 72 aus mehreren nebeneinander verlaufenden Kanalbereichen aufzubauen, so dass bei näherungsweise gleichbleibendem Gesamtströmungsquerschnitt die Oberfläche, an welcher das zu erwärmende flüssige Medium in Kontakt mit dem Wärmetauscherkörper 40 treten kann, deutlich vergrößert werden kann. Bei dieser Ausgestaltungsform ist es weiter möglich, zumindest einigen dieser Kanalbereiche Organe zuzuordnen, die diese selektiv abschließen können, um den Gesamtströmungsquerschnitt regulieren zu können. Hier können beispielsweise ansteuerbare Ventile zum Einsatz kommen. Auch ist es möglich, nach Art von Bimetallen wirksame Membranen einzusetzen, die je nach Temperatur der den zweiten Wärmetauscherbereich 70 durchströmenden Flüssigkeit Kanalbereiche abschließen (bei vergleichsweise hoher Temperatur) oder Kanalbereiche öffnen (bei vergleichsweise niedriger Temperatur).

Man erkennt aus der vorangehenden Beschreibung, dass durch die vorliegende Erfindung eine Heizeinrichtung vorgesehen ist, die dazu in der Lage ist, im Wesentlichen voneinander unabhängig zwei verschiedene Medien zu erwärmen, und dies bei sehr kompakter Baugröße. Wesentlich hierfür ist, dass einer einzigen Brenneranordnung 42 eine Wärmetauscheranordnung 16 mit zwei voneinander unabhängig wirksamen Wärmetauscherbereichen 56, 70 zugeordnet ist. Für den Betrieb der erfindungsgemäßen Heizeinrichtung ist dabei elementar, dass jeder der Wärmetauscherbereiche 70, 56 für sich wirksam sein kann, unabhängig davon, ob in dem anderen Wärmetauscherbereich 56, 70 das darin zu erwärmende Medium strömt oder nicht. Dabei lässt sich für jeden der Wärmetauscherbereiche 56, 70 die Wirksamkeit desselben, d. h. die Menge der darin auf ein Medium übertragenen Wärmeenergie, ebenfalls unabhängig einstellen, beispielsweise durch die vorzugsweise stufenlose Regulierbarkeit des jeweiligen Mediumstroms. Neben dem durch die kompakte Bauweise vorliegenden Platzgewinn führt der erfindungsgemäße Aufbau zu einer deutlichen Kosteneinsparung, beispielsweise im Bereich der Verschlauchung bzw. Verkabelung und vor allem durch den Wegfall eines zusätzlichen Wärmetauschers bzw. einer zusätzlichen Brenneranordnung. Auch kann die gesamte Sensorik deutlich einfacher ausgestaltet werden.

Die Figuren 4 und 5 zeigen eine alternative Ausgestaltungsform der erfindungsgemäßen Heizeinrichtung. Komponenten, welche vorangehend beschriebenen Komponenten hinsichtlich Aufbau bzw. Funktion entsprechen, sind mit dem gleichen Bezugszeichen unter Hinzufügung eines Anhangs "a" beschrieben. Es sei darauf hingewiesen, dass in wesentlichen Systembereichen die Wärmetauscheranordnung 16a bzw. die gesamte Heizeinrichtung 12a dem vorangehend mit Bezug auf die Figuren 2 und 3 beschriebenen Aufbau entsprechen. Es wird daher auf die diesbezüglichen Ausführungen verwiesen. Dies betrifft vor allem den Aufbau des ersten Wärmetauscherbereichs 56a mit dem Wärmetauscherkörper 40a und den an dessen Außenseite vorgesehenen bzw. festgelegten Wärmeübertragungsrippenelementen 66a mit Wärmeübertragungsrippenpaaren 62a.

Im Unterschied zur Ausgestaltungsform der Figuren 2 und 3 weist bei der in den Figuren 4 und 5 dargestellten Variante der Wärmetauscherkörper 40a in seinem Innenraum keinen Kanal- oder Raumbereich für den zweiten Wärmetauscherbereich 70a auf. Vielmehr erkennt man vor allem in Fig. 5, dass der zweite Wärmetauscherbereich 70a zwischen einem Einlassstutzen 74a und einem Auslassstutzen 76a (auch hier kann die Strömungsrichtung selbstverständlich umgekehrt sein) ein Leitungssystem 78a mit zwei zueinander parallel verlaufenden und jeweils an die Stutzen 74a bzw. 76a anschließenden Leitungssträngen 80a, 82a umfasst. Diese Leitungsstränge 80a, 82a, die zueinander im Wesentlichen gleich aufgebaut sind, umfassen an jeder der Seiten 58a, 60a des Wärmetauscherkörpers 40a, an welchen auch die Wärmeübertragungsrippenelemente 66a angeordnet sind, jeweils zwei zueinander näherungsweise parallel verlaufende und die an diesen Seiten 58a bzw. 60a vorgesehenen Wärmeübertragungsrippen 62a näherunsgweise orthogonal durchsetzende Leitungsabschnitte 84a, 86a, 88a, 90a. Dabei schließt der Leitungsabschnitt 84a an den Einlassstutzen 74a an und geht in seinem der Brenneranordnung 42a nahen Endbereich durch einen bogenartigen Verbindungsabschnitt 92a in den Leitungsabschnitt 86a über. Dieser ist an seinem von der Brenneranordnung 42a entfernt gelegenen Endbereich vermittels eines den Wärmetauscherkörper 40a überbrückenden Überbrückungsabschnitts 94a in Verbindung mit dem Leitungsabschnitt 88a, welcher in seinem anderen Endbereich durch einen bogenförmigen Verbindungsabschnitt 96a in den Leitungsabschnitt 90a übergeht. Dieser wiederum ist in seinem von der Brenneranordnung 42a entfernten Endbereich in Verbindung mit dem Auslassstutzen 76a. Selbiges trifft selbstverständlich auch für den Leitungsstrang 80a zu.

Die im Wärmetauscherkörper 40a von den Verbrennungsabgasen aufgenommene Wärme wird also über die Wärmeübertragungsrippen 62a in den Bereich des Leitungssystems 78a bzw. der Leitungsstränge 80a, 82a desselben geleitet. Die im Allgemeinen aus Metall aufgebauten Leitungsabschnitte 84a, 86a, 88a, 90a nehmen in ihren mit den Wärmeübertragungsrippen 62a in Kontakt stehenden Bereichen Wärme auf und übertragen sie dann auf das diese durchströmende Medium. Da dabei selbstverständlich auch die zwischen den Wärmeübertragungsrippen 62a liegenden Teile der verschiedenen Leitungsabschnitte 84a, 86a, 88a, 90a erwärmt werden, vergrößern diese gleichzeitig auch die Gesamtoberfläche des ersten Wärmetauscherbereichs 56a, da die in das Gehäuse 30a einströmende Luft selbstverständlich auch diese Teile der Leitungsabschnitte 84a, 86a, 88a, 90a umströmen wird.

Es sei darauf hingewiesen, dass selbstverständlich die Führung der verschiedenen Leitungsstränge des Leitungssystems 78a anders gewählt werden kann, als vorangehend beschrieben. Weiter ist es nicht zwingend, eine an beiden Seiten des Wärmetauscherkörpers 40a symmetrische Anordnung bereitzustellen. Ob die verschiedenen Leitungsabschnitte mit den Wärmeübertragungsrippen 62a, welche sie durchsetzen, fest verbunden sind, beispielsweise durch Verlötung, hängt von der geforderten Stabilität ab, ist aus Gründen der besseren thermischen Kopplung jedoch bevorzugt.

Bei der in den Figuren 4 und 5 dargestellten Ausgestaltungsvariante ergeben sich im Betrieb die gleichen Vorteile, wie bei der vorangehend beschriebenen Ausgestaltungsform. Auch hier kann also jeder der Wärmetauscherbereiche 70a, 56a im Wesentlichen unabhängig vom anderen Wärmetauscherbereich dadurch betrieben werden, dass eine Regulierung der Zufuhr des jeweiligen zu erwärmenden bzw. thermisch zu behandelnden Mediums vorgenommen wird. Selbstverständlich ist es auch bei dieser Ausgestaltungsform möglich, dierekt zwischen den Wärmetauscherbereichen 56a, 70a Wärme zu übertragen, nämlich dadurch, dass im Leitungssystem 78a strömendes erwärmtes Medium die Wärmeübertragungsrippen 62a erwärmt, welche dann wiederum die diese umströmende Luft erwärmen.

Abschließend sei noch darauf hingewiesen, dass selbstverständlich auch die beiden vorangehend beschriebenen Ausgestaltungsformen kombiniert werden können, dass also sowohl im Wärmetauscherkörper als auch im Bereich der Wärmeübertragungsrippen Strömungskanäle für das den zweiten Wärmetauscherbereich durchströmende Medium vorgesehen sein können. Weiter sei noch ausgeführt, dass die vorangehend mit Bezug auf die Ausgestaltungsformen der Figuren 2 bis 5 beschriebenen zu erwärmenden Medien Flüssigkeit, also beispielsweise Kühlflüssigkeit, und Luft nur beispielhaft erwähnt waren. Selbstverständlich ist es möglich, in diesen Bereichen andere Medien zu erwärmen.

## Patentansprüche

1. Heizeinrichtung für ein Fahrzeug, umfassend:
- eine Brenneranordnung (42; 42a) zur Erzeugung von Verbrennungswärme,
- eine Wärmetauscheranordnung (16; 16a) zur Übertragung von in der Brenneranordnung (42; 42a) erzeugter Verbrennungswärme auf zu erwärmendes Medium,
wobei die Wärmetauscheranordnung (16; 16a) einen ersten Wärmetauscherbereich (56; 56a) zur Übertragung von Verbrennungswärme auf ein gasförmiges erstes zu erwärmendes Medium aufweist und einen zweiten Wärmetauscherbereich (70; 70a) zur Übertragung von Verbrennungswärme auf ein flüssiges zweites zu erwärmendes Medium aufweist,
wobei
die Wärmetauscheranordnung (16; 16a) einen Wärmetauscherkörper (40; 40a) mit einem darin vorgesehenen Verbrennungsabgasführungsraum (44) zur Aufnahme von Verbrennungswärme aus den Verbrennungsabgasführungsraum (44) durchströmenden Verbrennungsabgasen aufweist,
wobei weiter
der erste Wärmetauscherbereich (56; 56a) eine Mehrzahl von an dem Wärmetauscherkörper (40; 40a) vorgesehenen, jeweils Wärmeübertragungsflächen (64; 64a) bereitstellenden Wärmeübertragungsrippen (62; 62a) aufweist und der zweite Wärmetauscherbereich (70; 70a) eine Strömungsleitungsanordnung (72, 78a) für das zweite zu erwärmende Medium aufweist,
die Strömungsleitungsanordnung (78a) wenigstens eine im Bereich der Wärmeübertragungsrippen (62a) verlaufende Mediumführungsleitung (80a, 82a) umfasst, und wobei
die wenigstens eine Mediumführungsleitung (80a, 82a) wenigstens einen Teil der Wärmeübertragungsrippen (62a) durchsetzt.

2. Heizeinrichtung nach Anspruch 1,
**dadurch gekennzeichnet, dass** die Wärmeübertragungsrippen (62; 62a) wenigstenszum Teil von dem Wärmetauscherkörper (40; 40a) separat ausgebildet sind und mit diesem in Wärmeübertragungsverbindung stehen.

3. Heizeinrichtung nach Anspruch 1 oder 2,
**dadurch gekennzeichnet, dass** die Strömungsleitungsanordnung (72) einen in dem Wärmetauscherkörper (40) ausgebildeten Mediumführungskanal (72) umfasst.

4. Heizeinrichtung nach Anspruch 3,
**dadurch gekennzeichnet, dass** der Mediumführungskanal (72) eine Mehrzahl von Mediumführungskanalbereichen umfasst.

5. Heizeinrichtung nach Anspruch 4,
**dadurch gekennzeichnet, dass** wenigstens ein Teil der Mediumführungskanalbereiche selektiv zur Durchströmung freigebbar ist.

6. Heizeinrichtung nach einem der Ansprüche 3 bis 5,
**dadurch gekennzeichnet, dass** der Mediumführungskanal (72) sich in dem Wärmetauscherkörper (40) näherungsweise parallel zum Verbrennungsabgasführungsraum (44) erstreckt.

7. Heizeinrichtung nach einem der Ansprüche 1 bis 6,
**dadurch gekennzeichnet, dass** die wenigstens eine Mediumführungsleitung (80, 82a) wenigstens einen Teil der Wärmeübertragungsrippen (62a) mehrfach durchsetzt.

8. Heizeinrichtung nach einem der Ansprüche 1 bis 7,
**gekennzeichnet durch** eine das erste zu erwärmende Medium führende Gehäuseanordnung (30; 30a), wobei die Wärmetauscheranordnung (16; 16a) im Wesentlichen in der Gehäuseanordnung (30; 30a) angeordnet ist und die Brenneranordnung (42; 42a) im Wesentlichen außerhalb der Gehäuseanordnung (30; 30a) angeordnet ist.

9. Heizeinrichtung nach einem der Ansprüche 1 bis 8,
**dadurch gekennzeichnet, dass** keiner der Wärmetauscherbereiche (56, 70; 56a, 70a) zur Erwärmung des darin zu erwärmenden Mediums das in dem anderen Wärmetauscherbereich (70, 56; 70a. 56a) zu erwärmende Medium benötigt.

10. Heizsystem für ein Fahrzeug, umfassend eine Heizeinrichtung (12; 12a) nach einem der vorangehenden Ansprüche, wobei ein Luftströmungsbereich dem ersten Wärmetauscherbereich (56; 56a) der Wärmetauscheranordnung (16; 16a) zu erwärmende und in einen Fahrzeuginnenraum einzuleitende Luft vermittels einer ersten Förderanordnung (18) als erstes zu erwärmendes Medium zuführt und ein Temperiermittelströmungsbereich (26) dem zweiten Wärmetauscherbereich (70; 70a) der Wärmetauscheranordnung (16; 16a) Temperiermittel eines Antriebsaggregats (20) vermittels einer zweiten Förderanordnung (28) als zweites zu erwärmendes Medium zuführt.

## Claims

1. Heating device for a vehicle, comprising:
- a burner arrangement (42; 42a) for producing combustion heat,
- a heat exchanger arrangement (16; 16a) for transferring combustion heat produced in the burner arrangement (42; 42a) to medium which is to be heated,
wherein the heat exchanger arrangement (16; 16a) has a first heat exchanger region (56; 56a) for transferring combustion heat to a gaseous first medium which is to be heated and a second heat exchanger region (70; 70a) for transferring combustion heat to a liquid second medium which is to be heated,
wherein
the heat exchanger arrangement (16; 16a) has a heat exchanger body (40; 40a) with a combustion exhaust gas conducting space (44) provided therein for receiving combustion heat from combustion exhaust gases flowing through the combustion exhaust gas conducting space (44),
also wherein
the first heat exchanger region (56; 56a) has a plurality of heat transfer ribs (62; 62a) provided on the heat exchanger body (40; 40a) and in each case providing heat transfer surfaces (64; 64a), and the second heat exchanger region (70; 70a) has a flow duct arrangement (72, 78a) for the second medium which is to be heated,
the flow duct arrangement (78a) comprises at least one medium conducting duct (80a, 82a) extending in the region of the heat transfer ribs (62a), and wherein
the at least one medium conducting duct (80a, 82a) passes through at least some of the heat transfer ribs (62a).

2. Heating device according to Claim 1,
**characterised in that** the heat transfer ribs (62; 62a) are at least in part formed separately from the heat exchanger body (40; 40a) and are connected to this in heat transfer terms.

3. Heating device according to Claim 1 or 2,
**characterised in that** the flow duct arrangement (72) comprises a medium conducting duct (72) formed in the heat exchanger body (40).

4. Heating device according to Claim 3,
**characterised in that** the medium conducting duct (72) comprises a plurality of medium conducting duct regions.

5. Heating device according to Claim 4,
**characterised in that** at least some of the medium conducting duct regions can be selectively opened up for through-flow.

6. Heating device according to any one of Claims 3 to 5,
**characterised in that** the medium conducting duct (72) extends in the heat exchanger body (40) approximately parallel to the combustion exhaust gas conducting space (44).

7. Heating device according to any one of Claims 1 to 6,
**characterised in that** the at least one medium conducting duct (80, 82a) passes repeatedly through at least some of the heat transfer ribs (62a).

8. Heating device according to any one of Claims 1 to 7,
**characterised by** a housing arrangement (30; 30a) conducting the first medium which is to be heated, wherein the heat exchanger arrangement (16; 16a) is disposed substantially in the housing arrangement (30; 30a) and the burner arrangement (42; 42a) is disposed substantially outside the housing arrangement (30; 30a).

9. Heating device according to any one of Claims 1 to 8,
**characterised in that** none of the heat exchanger regions (56, 70; 56a, 70a) requires, for heating the medium which is to be heated therein, the medium which is to be heated in the other heat exchanger region (70, 56; 70a, 56a).

10. Heating system for a vehicle, comprising a heating device (12; 12a) according to any one of the preceding Claims,
wherein an air flow region supplies air which is to be heated and introduced into a vehicle interior to the first heat exchanger region (56; 56a) of the heat exchanger arrangement (16; 16a) by means of a first delivery arrangement (18) as the first medium which is to be heated, and a temperature control agent flow region (26) supplies temperature control agent of a drive unit (20) to the second heat exchanger region (70; 70a) of the heat exchanger arrangement (16; 16a) by means of a second delivery arrangement (28) as the second medium which is to be heated.

## Revendications

1. Dispositif de chauffage pour un véhicule, comprenant :
- un ensemble (42 ; 42a) à brûleur, pour engendrer de la chaleur de combustion,
- un ensemble (16 ; 16a) à échangeur thermique pour transmettre, à un fluide devant être réchauffé, de la chaleur de combustion engendrée dans ledit ensemble (42 ; 42a) à brûleur,
ledit ensemble (16 ; 16a) à échangeur thermique englobant une première zone (56 ; 56a) d'échange thermique pour transmettre de la chaleur de combustion à un premier agent gazeux à réchauffer, et une seconde zone (70 ; 70a) d'échange thermique pour transmettre de la chaleur de combustion à un second agent liquide à réchauffer, sachant
que l'ensemble (16 ; 16a) à échangeur thermique présente un corps d'échange thermique (40 ; 40a) dans lequel une chambre (44) de guidage des échappements gazeux de combustion est prévue afin d'absorber de la chaleur de combustion émanant d'échappements gazeux de combustion parcourant ladite chambre de guidage (44),
sachant par ailleurs
que ladite première zone (56 ; 56a) d'échange thermique possède une pluralité d'ailettes (62 ; 62a) de transfert thermique prévues sur le corps d'échange thermique (40 ; 40a), et fournissant des surfaces respectives (64 ; 64a) de transfert thermique, et la seconde zone (70 ; 70a) d'échange thermique possède un ensemble (72, 78a) de canalisation de l'écoulement, affecté au second agent à réchauffer,
ledit ensemble (78a) de canalisation de l'écoulement renfermant au moins un conduit (80a, 82a) de guidage de fluide s'étendant dans la région des ailettes (62a) de transfert thermique, et sachant
que ledit conduit (80a, 82a) de guidage de fluide, prévu au minimum, traverse au moins une partie des ailettes (62a) de transfert thermique.

2. Dispositif de chauffage selon la revendication 1,
**caractérisé par le fait que** les ailettes (62 ; 62a) de transfert thermique sont réalisées, au moins en partie, distinctement du corps d'échange thermique (40 ; 40a) et sont en liaison de transfert thermique avec ledit corps.

3. Dispositif de chauffage selon la revendication 1 ou 2,
**caractérisé par le fait que** l'ensemble (72) de canalisation de l'écoulement englobe un canal (72) de guidage de fluide, pratiqué dans le corps d'échange thermique (40).

4. Dispositif de chauffage selon la revendication 3,
**caractérisé par le fait que** le canal (72) de guidage de fluide comprend une pluralité de segments de canal de guidage.

5. Dispositif de chauffage selon la revendication 4,
**caractérisé par le fait qu'**au moins une partie des segments du canal de guidage de fluide peut être sélectivement dégagée, pour autoriser la circulation.

6. Dispositif de chauffage selon l'une des revendications 3 à 5,
**caractérisé par le fait que** le canal (72) de guidage de fluide s'étend, dans le corps d'échange thermique (40), à peu près parallèlement à la chambre (44) de guidage des échappements gazeux de combustion.

7. Dispositif de chauffage selon l'une des revendications 1 à 6,
**caractérisé par le fait que** le conduit (80, 82a) de guidage de fluide, prévu au minimum, traverse répétitivement au moins une partie des ailettes (62a) de transfert thermique.

8. Dispositif de chauffage selon l'une des revendications 1 à 7,
**caractérisé par** un ensemble (30 ; 30a) à carter, guidant le premier agent à réchauffer, l'ensemble (16 ; 16a) à échangeur thermique étant pour l'essentiel logé à l'intérieur dudit ensemble (30 ; 30a) à carter, et l'ensemble (42 ; 42a) à brûleur étant pour l'essentiel disposé à l'extérieur dudit ensemble (30 ; 30a) à carter.

9. Dispositif de chauffage selon l'une des revendications 1 à 8,
**caractérisé par le fait qu'**aucune des zones (56, 70 ; 56a, 70a) d'échange thermique ne nécessite, pour le chauffage de l'agent devant y être réchauffé, le concours de l'agent devant être réchauffé dans l'autre zone (70, 56 ; 70a, 56a) d'échange thermique.

10. Système de chauffage pour un véhicule, renfermant un dispositif de chauffage (12 ; 12a) selon l'une des revendications précédentes, une zone de circulation d'air délivrant à la première zone (56 ; 56a) d'échange thermique de l'ensemble (16 ; 16a) à échangeur thermique, au moyen d'un premier ensemble de refoulement (18), de l'air qui doit être réchauffé, doit être introduit dans un habitacle du véhicule et représente un premier fluide devant être réchauffé ; et une zone (26) de circulation d'un agent d'équilibrage thermique délivrant à la seconde zone (70 ; 70a) d'échange thermique dudit ensemble (16 ; 16a) à échangeur thermique, au moyen d'un second ensemble de refoulement (28), de l'agent d'équilibrage thermique d'un groupe d'entraînement (20) qui représente un second fluide devant être réchauffé.
